# EUROPÄISCHE PATENTSCHRIFT

(11) **EP 2 551 179 B1**
(45) Veröffentlichungstag und Bekanntmachung des Hinweises auf die Patenterteilung: **21.12.2016**
(21) Anmeldenummer: 12175241.4
(22) Anmeldetag: 06.07.2012
(51) Int. Cl.: B62K 19/38, B62K 21/02, B62K 21/06, B62L 1/16

(54) **Fahrradrahmen mit Doppelbrücken-Fahrradgabel**
Bicycle frame with double bridge bicycle fork
Cadre de bicyclette avec fourche de bicyclette avec pont double

(30) Priorität: 29.07.2011 DE 202011103814 U
(43) Veröffentlichungstag der Anmeldung: 30.01.2013
(73) Patentinhaber: Canyon Bicycles GmbH, 56073 Koblenz (DE)
(72) Erfinder: Thoma, Vincenz, 56068 Koblenz (DE); Scheffer, Lutz, 82467 Garmisch-Partenkirchen (DE)
(74) Vertreter: dompatent von Kreisler Selting Werner - Partnerschaft von Patent- und Rechtsanwälten mbB

(56) Entgegenhaltungen:
- EP-A1- 1 518 786
- EP-A2- 0 960 807
- WO-A1-2012/168781
- WO-A2-2007/031967
- DE-A1- 2 803 565
- US-A1- 2006 061 057
- US-A1- 2007 068 744
- US-A1- 2008 035 431
- US-A1- 2010 213 684
- US-A1- 2011 120 256
- US-A1- 2011 121 538
- US-A1- 2011 181 015

## Beschreibung

Die Erfindung betrifft einen Fahrradrahmen mit Doppelbrücken-Fahrradgabel, insbesondere für Rennräder, besonders bevorzugt für Zeitfahrmaschinen.

Bei Rennrädern und insbesondere bei Zeitfahrmaschinen spielt die Aerodynamik eine wichtige Rolle. Fahrradhersteller sind daher bestrebt, zur Verbesserung der Aerodynamik die Züge oder Leitungen, möglichst innerhalb des Rahmens zu verlegen. Es ist bekannt die Züge für den vorderen und hinteren Umwerfer sowie für die Hinterradbremse, ausgehend vom Lenker, seitlich neben dem Steuerrohr, in dem der Kabelschaft schwenkbar angeordnet ist, vorbeizuführen und sodann von unten oder von der Seite in das Unterrohr des Fahrradrahmens einzuführen. Wenngleich hierdurch die Aerodynamik bereits verbessert werden kann, führen die seitlich am Steuerrohr vorbeigeführten Züge weiterhin zu Verwirbelungen und somit zu Verschlechterungen der Aerodynamik. Ferner wird zur Verbesserung der Aerodynamik versucht die Anordnung und Ausgestaltung der Vorderradbremse zu verändern, da eine in Fahrtrichtung vor der Doppelbrücken-Fahrradgabel angeordnete Vorderradbremse zu erheblichen Luftverwirbelungen führt und somit die Aerodynamik stark beeinträchtigt. Es ist bekannt, die Vorderradbremse auf der in Fahrtrichtung Rückseite der Gabelkrone bzw. Gabelbrücke, die die beiden Gabelbeine miteinander verbindet, anzuordnen. Hierdurch kann eine gewisse Verbesserung der Aerodynamik erzielt werden, da die Vorderradbremse nicht direkt vom Fahrtwind angeströmt wird. Allerdings treten auch hierbei weiterhin erhebliche Verwirbelungen auf. Des Weiteren besteht bei derartigen Bremsenanordnungen der Nachteil, dass der Bremszug seitlich neben dem Steuerrohr des Rahmens angeordnet ist und somit ebenfalls zu einer Verschlechterung der Aerodynamik führt.

Ferner werden bei Zeitfahrmaschinen sogenannte Doppelbrückengabeln verwendet. Eine derartige Gabel weist eine die beiden Gabelbeine miteinander verbindende Gabelkrone auf, wobei die Gabelkrone eine untere Lageraufnahme, wie einen Lagerzapfen, trägt. In Fahrtrichtung vor der Gabelkrone ist der Gabelschaft angeordnet. Der Gabelschaft ist somit vor dem Steuerrohr des Fahrradrahmens angeordnet. Von einem weiteren Bauteil wird das obere Steuerlager getragen. Dieses Bauteil wird vor dem Steuerrohr des Rahmens mit dem Gabelschaft verbunden und stellt ferner die Verbindung zu dem Lenker entsprechend eines Vorbaus dar. Die beiden Steuerlager sind über eine massive, eine hohe Steifigkeit aufweisende Gewindestange verbunden und gegeneinander verspannt. Durch dieses durchgehende zwischen den beiden Steuerlagern angeordnete Steuerrohr wird die erforderliche Steifigkeit realisiert.

Dokument US2011/0121538 A1 offenbart einen Fahrradrahmen mit einem Steuerrohr und einer mit dem Steuerrohr verbundenen Doppelbrücken-Fahrradgabel gemäß dem Oberbegriff von Anspruch 1.

Aufgabe der Erfindung ist es, einen Fahrradrahmen mit Doppelbrücken-Fahrradgabel zu schaffen, mit der die Aerodynamik verbessert werden kann. Die Lösung der Aufgabe erfolgt erfindungsgemäß durch die Merkmale des Anspruchs 1.

Der erfindungsgemäße Fahrradrahmen weist ein Steuerrohr auf und eine Doppelbrücken-Fahrradgabel, die insbesondere für Rennräder und besonders bevorzugt für Zeitfahrmaschinen entwickelt wurde, mit zwei miteinander über eine Gabelkrone verbundenen Gabelbeinen. Die Gabelkrone ist mit einer unteren, insbesondere als Lagerzapfen ausgebildeten Lageraufnahme verbunden. Hierbei handelt es sich vorzugsweise um eine Lageraufnahme, die von unten in das Steuerrohr des Fahrradrahmens eingesteckt wird, das Steuerrohr jedoch nicht vollständig durchdringt, so dass auch keine direkte Verbindung zwischen der unteren Lageraufnahme und der oberen Lageraufnahme vorgesehen sein muss. Insbesondere muss, sofern überhaupt eine entsprechende hülsenartige Verbindung zwischen der oberen und der unteren Lageraufnahme vorgesehen ist, diese keine oder nur einen geringen Anteil der zu übertragenden Kräfte aufnehmen. Bei der erfindungsgemäßen Doppelbrücken-Fahrradgabel erfolgt die Kraftaufnahme und Übertragung über den versetzt bzw. in Fahrtrichtung vor dem die Lagerelemente aufnehmenden Steuerrohr des Fahrradrahmens angeordneten Gabelschaft. Dies hat den erfindungsgemäß wesentlichen Vorteil, dass aus einem Bereich zwischen den beiden Lageraufnahmen bzw. zwischen den beiden Lagern Aktivierungselemente wie Züge, hydraulische Leitungen, elektrische Leitungen und dergleichen in das sich anschließende Rahmenelement eingeführt werden können. Erfindungsgemäß können somit derartige Aktivierungselemente, bei denen es sich beispielsweise um Schaltelemente für den vorderen oder hinteren Umwerfer oder um Betätigungs- bzw. Aktivierungselemente für die Hinterradbremse handelt, aus dem Bereich zwischen den beiden Lagern des Steuerkopfs nach hinten geführt werden.

Entsprechende Aktivierungselemente müssen somit nicht seitlich oder von unten in das Unterrohr eingeführt werden. Hierdurch ist das Auftreten von Verwirbelungen in diesem Bereich vermieden. Erfindungsgemäß werden die Aktivierungselemente vom Lenker unmittelbar in das den Vorbau ausbildende Bauteil eingeführt und von diesem durch das obere Lager in das Steuerrohr geführt. Aus diesem erfolgt sodann das Einführen der Aktivierungselemente in das benachbarte Rahmenelement. Bevor die Betätigungs- bzw. Aktivierungselemente zwischen den beiden Lagern des Steuerkopfs nach hinten in den Rahmen geführt werden, können diese somit entweder von oben durch den Vorbau oder unmittelbar vom Lenker durch das Innere des Vorbaus hindurch geführt werden. Ebenso ist es auch möglich, dass nur ein Teil der Aktivierungselemente, beispielsweise die Schaltzüge, innerhalb des Lenkers und innerhalb des Vorbaus verlaufen und der Bremszug von oben in den Vorbau eingeführt ist.

Erfindungsgemäß sind die entsprechenden Aktivierungselemente auch bereits innerhalb des Lenkers angeordnet. Dies hat den erfindungswesentlichen Vorteil, dass entsprechende Aktivierungselemente vollständig innerhalb von Fahrradbauteilen (dem Lenker, dem Vorbau, dem Steuerrohr und dem Rahmen) angeordnet sind. Die entsprechenden Aktivierungselemente treten beispielsweise bei einer entsprechend ausgebildeten Doppelbrücken-Fahrradgabel gar nicht oder in einem hinsichtlich der Aerodynamik unkritischen Bereich aus dem Rahmen aus. Dies kann gegebenenfalls auch je nach möglicher Ausgestaltung der Umwerfer, auch für diese gelten.

Der vorzugsweise mit der Gabelkrone und auch der unteren Lageraufnahme fest verbundene untere Teil des Gabelschafts ist mit dem Vorbau bzw. einem den oberen Teil des Gabelschafts ausbildenden Vorbau fest verbunden. Insbesondere erfolgt die Verbindung durch Verschrauben, wobei der Vorbau bzw. ein mit dem Vorbau fest verbundender Ansatz die obere Lageraufnahme bildet, so dass durch die Verschraubung eine Vorspannung der Lager realisiert werden kann.

Insbesondere zur Montagevereinfachung ist in besonders bevorzugter Ausführungsform die obere Lageraufnahme mit einer Hülse verbunden. Die Hülse ragt vorzugsweise durch das gesamte Steuerrohr und ist auch mit der unteren Lageraufnahme verbunden, wobei über die Hülse vorzugsweise keine oder zumindest keine wesentlichen Kräfte übertragen werden. Die Hülse weist einen in Richtung des Rahmenelements weisende Öffnung auf, durch die Aktivierungselemente hindurchgeführt werden können.

Bei einer bevorzugten Weiterbildung der Erfindung ist insbesondere mit der Hülse ein Zuganschlag verbunden. Ein entsprechender Zuganschlag kann auch mit der oberen oder der unteren Lageraufnahme verbunden sein. Der Zuganschlag dient dazu, dass beispielsweise bei Vorsehen eines Bowdenzugs die äußere Hülle des Bowdenzugs nur beispielsweise vom Brems- oder Schalthebel bis zum Zuganschlag führt und der Bowdenzug selbst sodann im Rahmeninnern ohne Hülse verläuft. Hierdurch ist es möglich, den Zug im Rahmeninneren stets auf Spannung zu halten, so dass ein Klappern oder Schlagen des Zuges vermieden ist.

Um eine Bremseinheit in einer besonders bevorzugten Ausführungsform der Erfindung unterhalb bzw. zumindest teilweise innerhalb der Gabelkrone anordnen zu können, ist ein Aktivierungselement für die Bremse, wie ein Bowdenzug oder dergleichen durch die untere Lageraufnahme bzw. das in der Lageraufnahme angeordnete untere Lagerelement geführt. Das Aktivierungselement, bei dem es sich anstelle eines Seilzugs auch um eine Hydraulikleitung oder auch eine elektrische Leitung handeln kann, ist somit im Wesentlichen von oben zu der Bremseinheit geführt. Dies hat den Vorteil, dass auch das Aktivierungselement zumindest in diesem Bereich innerhalb des Rahmens angeordnet ist und keine Zuführung eines Bowdenzuges oder eines anderen Aktivierungselements von außen, seitlich zur Bremseinheit erforderlich ist. Hierdurch kann die Aerodynamik des Fahrrads weiter verbessert werden, da kein eine Verwirbelung hervorrufendes Aktivierungselement wie ein Bowdenzug im Luftstrom angeordnet ist. Besonders bevorzugt ist es hierbei, dass das Aktivierungselement von dem am Lenker angeordneten Bremshebel durch den Lenker, vorzugsweise unmittelbar durch den Vorbau und sodann durch, in besonders bevorzugter Ausführungsform sowohl die obere als auch die untere Lageraufnahme geführt ist. Hierbei können die beiden Lageraufnahmen mit einem insbesondere steif ausgebildeten Steuerrohr verbunden sein, wobei das Steuerrohr insbesondere die beiden in den Lageraufnahmen angeordneten Lagerelemente vorspannt.

Die Bremseinheit weist vorzugsweise zwei Bremshebel auf, die innerhalb der Gabelbeine und/ oder der Gabelkrone angeordnet sind. Vorzugsweise sind die Bremshebel hierbei vorzugsweise teilweise in dem oberen, in Richtung der Gabelkrone weisenden Bereich der Gabelbeine und teilweise innerhalb der Gabelkrone angeordnet. In bevorzugter Ausführungsform ragen die Bremshebel somit nicht aus der Doppelbrücken-Fahrradgabel heraus, so dass eine aerodynamisch optimierte Außenfläche der Gabel realisierbar ist.

Vorzugsweise handelt es sich bei den Bremshebeln um schwenkbare Bremshebel, deren Schwenkachse ebenfalls innerhalb der beiden Gabelbeine und/ oder der Gabelkrone angeordnet ist. Hierbei sind in bevorzugter Ausführungsform die beiden Schwenkhebel in einer Ebene angeordnet, so dass die beiden von den unteren Enden der Bremshebel getragenen Bremsbacken exakt einander gegenüberliegen und insbesondere die von den Bremshebeln auf die Bremsbacken übertragenen Kräfte einander gegenüberliegend in einer senkrecht zur Längsrichtung bzw. senkrecht zur Mittelebene des Vorderrads angeordneten Ebene liegen. Auch die beiden freien Bremshebelenden, d.h. diejenigen Enden der Bremshebel, die keine Bremsbacken tragen, sind in bevorzugter Ausführungsform einander gegenüberliegend angeordnet. Insbesondere kreuzen sich die beiden Bremshebel nicht.

Die Schwenkachsen können hierbei oberhalb der die Bremsbacken tragenden Enden angeordnet sein, so dass das Betätigen der Bremse durch Auseinanderdrücken der beiden oberen freien Enden der Bremshebel erfolgt. Ebenso ist es möglich, die Schwenkachsen unterhalb der sodann in einem Zwischenstück der Bremshebel angeordneten Bremsbacken anzuordnen, so dass das Betätigen der Bremse durch Zusammendrücken der beiden oberen freien Enden der Bremshebel erfolgt.

Die Betätigung der beiden Bremshebel erfolgt vorzugsweise durch eine gemeinsame Betätigungseinrichtung. Die Betätigungseinrichtung wird nachfolgend anhand einer Bremseinheit beschrieben, bei der die Schwenkachsen oberhalb der die Bremsbacken tragenden freien Enden angeordnet sind. Ein entsprechend ausgestaltetes Betätigungselement kann selbstverständlich auch bei einer Bremseinheit vorgesehen sein, bei der die Schwenkachsen unterhalb der Bremsbacken vorgesehen sind.

Die Bremseinheit ist in bevorzugter Ausführungsform daher zwischen den beiden freien Bremshebelenden angeordnet. Die Betätigungseinrichtung weist vorzugsweise mindestens ein auf die Bremshebelenden einwirkendes Betätigungselement auf. Beispielsweise ist es möglich, dass die beiden Bremshebelenden schräg verlaufen bzw. aufeinander zu gerichtet sind. Zwischen den beiden Bremshebelenden kann sodann ein beispielsweise trapez- oder dreieckförmiges Betätigungselement angeordnet sein. Durch Verschieben bzw. Ziehen eines derartigen Betätigungselements nach oben werden die beiden freien Enden der Bremshebelenden auseinandergedrückt. Da diese über Schwenkachsen gehalten sind, werden die beiden Bremsbacken aufeinander zu bewegt und gegen die Felge gedrückt.

In besonders bevorzugter Ausführungsform der Betätigungseinrichtung weist diese zwei Betätigungselemente auf. Die beiden Betätigungselemente, die vorzugsweise über einen gemeinsamen Bremszug oder eine gemeinsame Hydraulikleitung betätigt werden, sind vorzugsweise als Schwenkhebel ausgebildet. Die Schwenkhebel, die insbesondere an einem Halteelement fixiert sind, werden, insbesondere gemeinsam, durch Betätigen des Bremszugs oder Aufbringen einer Hydraulikkraft verschwenkt. Die Schwenkhebel bringen eine Kraft auf die freien Enden der Bremshebelenden auf, wodurch diese auseinander gedrückt werden. Dies bewirkt wiederum ein Bewegen der beiden Bremsbacken aufeinander zu.

Die beiden vorzugsweise als Schwenkhebel ausgebildeten Betätigungselemente sind derart schwenkbar an einem Halteelement fixiert, dass durch Betätigen der Schwenkhebel diese in entgegengesetzte Richtung zum Bremsen nach außen verschwenkt werden. Insbesondere ist das Halteelement innerhalb der Gabelkrone angeordnet, insbesondere fixiert. In bevorzugter Weiterbildung weist das Halteelement vorzugsweise zwei als Anlageflächen für die Bremshebelenden ausgebildete Seitenflächen auf. Bei geöffneter Bremse können die Bremshebel an diesen Flächen anliegen.

Erfindungsgemäß ist zur Verbesserung der Aerodynamik vorzugsweise auch das Aktivierungselement für die Vorderradbremse wie der Bremszug oder eine entsprechende Hydraulikleitung innerhalb des Rahmens anzuordnen. Hierbei ist es bevorzugt, dass der Bremszug durch die Gabelkrone und die untere Lageraufnahme geführt ist. Von dort gelangt der Bremszug in das Steuerrohr des Rahmens und kann von hier durch die obere Lageraufnahme und das den Lenker tragende Bauteil zu dem am Lenker angeordneten Bremsgriff geführt werden. Ferner ist es bevorzugt, dass die insbesondere als Lagerzapfen ausgebildete Lageraufnahme an ihrer Oberseite verschlossen ist, so dass die Oberseite der Lageraufnahme als Zuganschlag für den Bremszug genutzt werden kann. Der Zug kann somit einschließlich Hülle durch das Steuerrohr geführt werden und mündet in den Zuganschlag. Unterhalb des Zuganschlags verläuft der Zug sodann frei, d.h. ohne Hülle, zu dem Betätigungselement der Bremseinheit.

In einer besonders bevorzugten Ausführungsform der Erfindung ist es möglich, die Doppelbrücken-Fahrradgabel derart auszugestalten, dass der Querschnitt des Gabelbeins in der Höhe des Reifens ein Verhältnis von Länge zu Breite von maximal 3:1 aufweist. Insofern werden mit der erfindungsgemäßen Doppelbrücken-Fahrradgabel mit Bremseinheit auch die strengen Regeln des UCI, d.h. des Fahrradsportverbandes, erfüllt. Nachfolgend wird die Erfindung anhand einer bevorzugten Ausführungsform unter Bezugnahme auf die anliegenden Zeichnungen näher erläutert.

Es zeigen:
- Fig. 1: eine schematische, teilweise geschnittene Ansicht des Fahrradrahmens im Bereich des Steuerrohrs zusammen mit der erfindungsgemäßen Doppelbrücken-Fahrradgabel,
- Fig. 2: eine schematische Seitenansicht der Doppelbrücken-Fahrradgabel im Bereich der Gabelkrone, und
- Fig. 3: eine schematische, geschnittene Rückansicht der erfindungsgemäßen Doppelbrücken-Fahrradgabel.

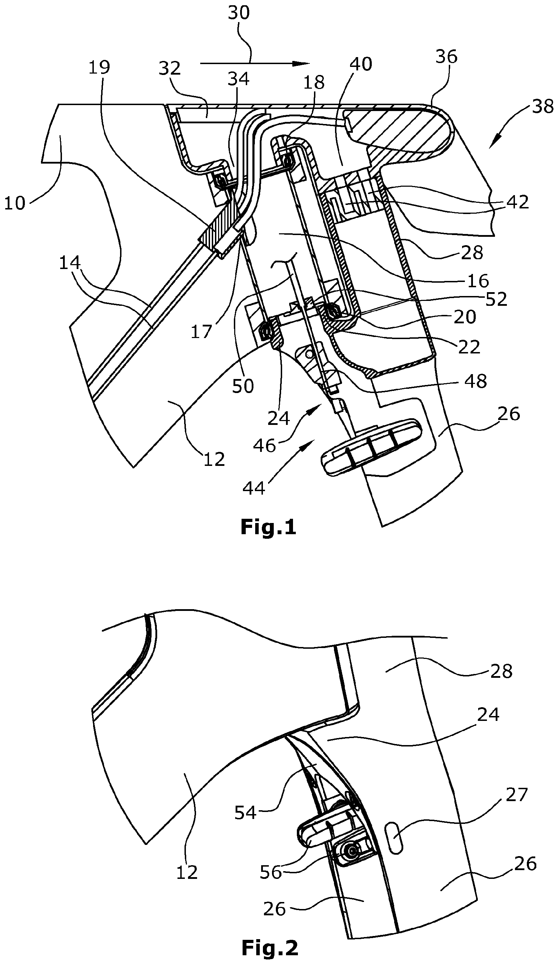

In Fig. 1 ist ein Ausschnitt einer Zeitfahrmaschine schematisch dargestellt. Hierbei ist ein Oberrohr 10 sichtbar, das mit einem Unterrohr 12 verbunden ist, wobei im Unterrohr 12 Schaltzüge 14 angeordnet sind. In einem Steuerrohr 16 ist ein oberes Lager 18 sowie ein unteres Lager 20 angeordnet. Das untere Lager 20 ist von einer als Lagerzapfen ausgebildeten Lageraufnahme 22 getragen. Die Lageraufnahme 22 ist im dargestellten Ausführungsbeispiel einstückig mit einer Gabelkrone 24 ausgebildet. Die Gabelkrone 24 verbindet die beiden Gabelbeine 26, wobei es sich hierbei insbesondere um eine aus Verbundwerkstoff hergestellte, insbesondere glasfaserverstärkte Gabel handelt, so dass die Gabelkrone 24 und die Gabelbeine 26 ebenfalls einstückig ausgebildet sind. Ferner weist die Gabel einen Gabelschaft 28 auf, der in Fahrtrichtung 30 vor dem Steuerrohr 16 angeordnet und somit gegenüber der Gabelkrone 24 versetzt ist.

Ein oberes Bauteil 32 weist eine ebenfalls zapfenförmige Lageraufnahme 34 zur Aufnahme des oberen Lagers 18 auf und bildet somit den Vorbau aus. Ferner weist das Bauteil 32 einen Ansatz 36 auf, der einen Fahrradlenker 38, im dargestellten Ausführungsbeispiel einen Triathlonlenker, trägt. Zwischen der Lageraufnahme 34 und dem Ansatz 36 ist ein in Richtung des Gabelschafts 28 weisender Ansatz 40 vorgesehen. Der Ansatz 40 ist über Schrauben 42 mit dem Gabelschaft 28 verbunden. Die Übertragung der Kräfte erfolgt nicht oder zumindest nur zu einem sehr geringen Anteil über das Steuerrohr 16, sondern über den Gabelschaft 28 und dem mittels der Schrauben 42 mit dem Gabelschaft 28 verbundenen Ansatz 40 des Vorbaus 32. Hierdurch ist es möglich, in dem hülsenförmig ausgestalteten Steuerrohr 16 eine Öffnung 17 vorzusehen. Ein Aktivierungselement wie ein Schalt- oder Bremszug 14 ist durch die Öffnung 17 hindurch in das Innere des Steuerrohrs 16 geführt. Aus dem Steuerrohr 16 sind die Züge 14, bei denen es sich selbstverständlich auch um elektrische Leitungen, Hydraulikleitung oder dergleichen handeln kann, durch die Lageraufnahme 34 des oberen Lagers 18 in den Vorbau 32 und von diesem in entsprechende Bereich des Lenkers 38 geführt. Die Aktivierungselemente 14 sind somit vollständig innerhalb der entsprechenden Bauteile angeordnet und treten erst beispielsweise im Bereich des vorderen Umwerfers aus dem unteren Rahmenrohr aus. Hierdurch ist die Aerodynamik des Fahrrads erheblich verbessert, da keine durch außenliegende Aktivierungselemente hervorgerufene Verwirbelungen auftreten.

In der Öffnung 17 der Hülse 16 ist im dargestellten Ausführungsbeispiel ein Zuganschlag 19 angeordnet. Der Zuganschlag 19 ist derart ausgebildet, dass bei Vorsehen von Bowdenzügen als Aktivierungselemente 14 die Umhüllungen der Bowdenzüge in dem Zuganschlag 19 enden und somit innerhalb des Unterrohrs 12 nur noch die entsprechenden Metalldrähte angeordnet sind. Diese können auf Spannung gehalten werden, so dass ein Klappern oder Klopfen vermieden ist.

Unterhalb der Gabelkrone 24 ist eine in die Gabelbeine 26 sowie die Gabelkrone 24 integrierte Bremseinheit 44 angeordnet. Die Bremseinheit 44 weist eine Betätigungseinrichtung 46 auf, die mit einem Bowdenzug 48 betätigbar ist. Der Bowdenzug 48 führt durch die Gabelkrone 24 und die Lageraufnahme 22 in das Innere des Steuerrohrs 16. Weiter führt der Bowdenzug 48 durch das obere Lager 18 hindurch und ist von dort zu dem Lenker 38 bzw. der Bremse geführt. Die Lageraufnahme 22 ist an der Oberseite verschlossen, so dass eine Hülse 50 des Bowdenzugs 48 nur innerhalb des Steuerrohrs angeordnet ist und bis zum Bremshebel führt. Die Hülse 50 ist in einem zylindrisch ausgebildeten Zugendanschlag 52, der vorzugsweise einstückig mit der Lageraufnahme 22 ausgebildet ist, gehalten.

Die Bremseinheit 44 ist erfindungsgemäß vorzugsweise unterhalb einer Drehachse der Gabel angeordnet, wobei die Drehachse im dargestellten Ausführungsbeispiel im Wesentlichen mit der Hülse 50 innerhalb des Steuerrohrs 16 zusammenfällt.

In montiertem Zustand (Fig. 2) ist eine Rückseite der Gabelbeine 26 sowie der Gabelkrone 24 mit einem Deckelelement 54 verschlossen. Insofern sind bei fertig montierter Bremseinheit 44 nur noch die beiden Bremsbacken 56 sichtbar.

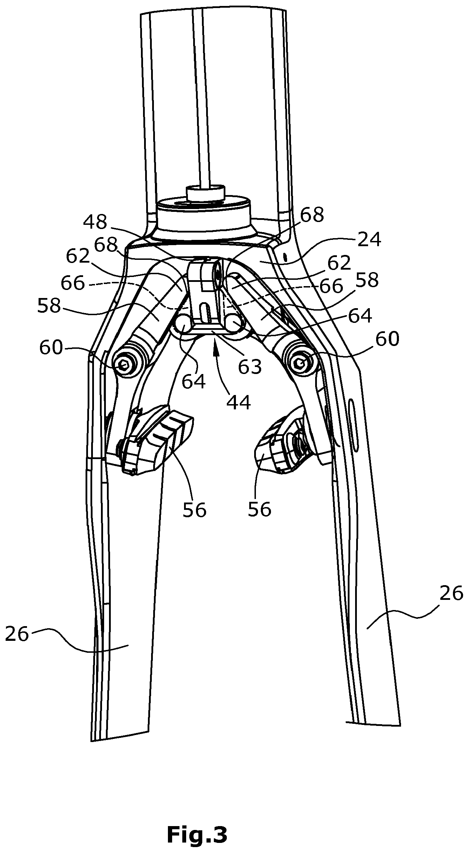

Die erfindungsgemäße Doppelbrücken-Fahrradgabel weist zwei Bremshebel 58 (Fig. 3) auf, die innerhalb der Gabelbeine 26 sowie der Gabelkrone 24 angeordnet sind. Die beiden Bremshebel sind über Schwenkachsen 60 schwenkbar gehalten, wobei die Schwenkachsen 60 ebenfalls innerhalb der Gabelbeine 26 bzw. der Gabelkrone 24 angeordnet sind. Wenn die beiden freien Bremshebelenden 62 aus der in Fig. 3 dargestellten Stellung, in der kein Bremsen erfolgt, zum Bremsen auseinandergedrückt werden, erfolgt ein Bewegen der beiden Bremsbacken 56 nach innen in Richtung der nicht dargestellten Felge. Um dieses Verschwenken der Bremshebel 58 zu realisieren ist die Betätigungseinrichtung 44 vorgesehen. Diese weist ein innerhalb der Gabelkrone angeordnetes Halteelement 63 auf. Das Halteelement 63 trägt zwei Schwenkachsen 64, um die jeweils zwei innerhalb des Halteelements angeordnete, in Fig. 3 gestrichelt dargestellte Schwenkhebel 66 schwenkbar sind. Die Schwenkhebel 66 sind mit dem Bremszug 48 verbunden. Durch Ziehen des Bremszugs 48 in Fig. 3 nach oben erfolgt somit ein Verschwenken der beiden Schwenkhebel 66 nach außen. Hierdurch werden die freien Enden 62 der Bremshebel 58 nach außen gedrückt, was wiederum ein Bewegen der beiden Bremsbacken nach innen in Richtung der Felgen bewirkt.

Das im Wesentlichen in Draufsicht trapezförmige Halteelement 63 weist zwei schräg angeordnete Seitenflächen 68 auf, an denen die freien Enden 62 der Bremshebel 58 anliegen, wenn die Bremse nicht betätigt wird.

## Patentansprüche

1. Fahrradrahmen mit einem Steuerrohr (16) und einer mit dem Steuerrohr (16) verbundenen Doppelbrücken-Fahrradgabel, wobei die Doppelbrücken-Fahrradgabel aufweist:
- eine zwei Gabelbeine (26) miteinander verbindenden Gabelkrone (24),
- eine mit der Gabelkrone (24) verbundenen unteren Lageraufnahme (22),
- eine mit einem Lenkervorbau (32) verbundenen oberen Lageraufnahme (34),
- einem zur Gabelkrone (24) versetzt angeordneten Gabelschaft (28), der die beiden Lageraufnahmen (22, 32) miteinander verbindet und
- von einem mit dem Vorbau (32) verbundenen Lenker (38) zwischen den beiden Lageraufnahmen (32, 22) in ein Rahmenelement (12) geführte Aktivierungselemente (14) für Schaltelemente und/ oder eine Hinterradbremse,
**dadurch gekennzeichnet, dass**
zumindest ein Teil der Aktivierungselemente (14) vom Lenker (38) unmittelbar in den Vorbau (32) eingeführt sind und vom Vorbau (32) durch die obere Lageraufnahme (34) in das Steuerrohr (16) geführt sind, so dass die Aktivierungselemente (14) vollständig innerhalb dem Lenker (38), dem Vorbau (32), dem Steuerrohr (16) und dem Rahmenelement (12) angeordnet sind.

2. Fahrradrahmen mit Doppelbrücken-Fahrradgabel nach Anspruch 1, **dadurch gekennzeichnet, dass** der Gabelschaft (28) mit dem Vorbau (32) fest verbunden und insbesondere verschraubt ist.

3. Fahrradrahmen mit Doppelbrücken-Fahrradgabel nach einem der Ansprüche 1 oder 2, **dadurch gekennzeichnet, dass** mit der oberen Lageraufnahme (34) eine Hülse (50) verbunden ist, die eine in Richtung des Rahmenelements (12) weisende Öffnung (17) zum Hindurchführen der Aktivierungselemente (14) aufweist.

4. Fahrradrahmen mit Doppelbrücken-Fahrradgabel nach einem der Ansprüche 1 bis 3, **dadurch gekennzeichnet, dass** die Hülse (50) mit der unteren Lageraufnahme (22) verbunden ist.

5. Fahrradrahmen mit Doppelbrücken-Fahrradgabel nach einem der Ansprüche 1 bis 4, **dadurch gekennzeichnet, dass** unterhalb der Gabelkrone (24) eine in die Fahrradgabel integrierte Bremseinheit (44) angeordnet ist.

6. Fahrradrahmen mit Doppelbrücken-Fahrradgabel nach Anspruch 5, **dadurch gekennzeichnet, dass** die Bremseinheit (44) zwei Bremshebel (58) aufweist, die innerhalb der Gabelbeine (26) und/ oder der Gabelkrone (24) angeordnet sind.

7. Fahrradrahmen mit Doppelbrücken-Fahrradgabel nach Anspruch 6, **dadurch gekennzeichnet, dass** die Bremshebel (58) von innerhalb der Gabelbeine (26) und/ oder der Gabelkrone (24) angeordneten Schwenkachsen (60) getragen sind.

8. Fahrradrahmen mit Doppelbrücken-Fahrradgabel nach einem der Ansprüche 1 bis 7, **dadurch gekennzeichnet, dass** der Querschnitt des Gabelbeines (26) in der Höhe eines montierten Reifens ein Verhältnis von Länge zu Breite von maximal 3:1 aufweisen.

## Claims

1. A bicycle frame with a head tube (16) and a double bridge bicycle fork connected with the head tube (16), the double bridge bicycle fork comprising:
a fork crown (24) connecting two fork legs (26),
a bottom bearing seat (22) connected with said fork crown (24),
an upper bearing support (34) connected with a stem (32),
a steer tube (28) offset from the fork crown (24), said steer tube connecting said two bearing seats (22, 32), and
actuation elements (14) for switching elements and/or a rear wheel brake, said actuation elements being guided from a handle bar (38) connected with said stem (38), passing between said two bearing seats (32, 22), into a frame element (12),
**characterized in that**
at least a part of the actuation elements (14) is guided from the handle bar (38) directly into the stem (32) and is passed from the stem (32) through the upper bearing seat (34) into the head tube (16) so that the actuation elements (14) are completely arranged within the handle bar (38), the stem (32) the head tube (16) and the frame element (12).

2. The bicycle frame with double bridge bicycle fork of claim 1, **characterized in that** the steer tube (28) is fixedly connected with the stem (32), in particular screwed thereto.

3. The bicycle frame with double bridge bicycle fork of claim 1 or 2, **characterized in that** a sleeve (16) is connected with the upper bearing seat (34), which has an opening (17) directed towards the frame element (12) and intended for passing the actuation elements (14) therethrough.

4. The bicycle frame with double bridge bicycle fork of one of claims 1 to 3, **characterized in that** the sleeve (16) is connected with the bottom bearing seat (22).

5. The bicycle frame with double bridge bicycle fork of one of claims 1 to 4, **characterized in that** a brake unit (44) integrated in the bicycle fork is arranged below the fork crown (24).

6. The bicycle frame with double bridge bicycle fork of claim 5, **characterized in that** the brake unit (44) comprises two brake arms (58) arranged within the fork legs (26) and/or the fork crown (24).

7. The bicycle frame with double bridge bicycle fork of claim 6, **characterized in that** the brake arms (58) are supported on pivot axes (60) arranged within the fork legs (26) and/or the fork crown (24).

8. The bicycle frame with double bridge bicycle fork of one of claims 1 to 7, **characterized in that** the cross section of the fork leg (26) at the level of a mounted tire has a length-to-width ratio of at most 3:1.

## Revendications

1. Cadre de bicyclette avec un tube de guidage (16) et avec une fourche de bicyclette avec pont double reliée au tube de guidage (16), la fourche de bicyclette avec pont double comprenant
- une couronne de fourche (24) reliant l'un à l'autre deux bras de fourche (26),
- une réception de palier inférieure (22) reliée à la couronne de fourche (24),
- une réception de palier supérieure (34) reliée à une avancée de guidon (32),
- un tronc de fourche (28) décalé par rapport à la couronne de fourche (24), qui relie entre elles les deux réceptions de palier (22, 32) et
- des éléments d'activation (14) pour des éléments de commande et/ou un frein de roue arrière, guidés entre les deux réceptions (32, 22) dans un élément de cadre (12) par un guidon (38) relié à l'avancée (32),
**caractérisé en ce qu'**au moins une partie des éléments d'activation (14) sont introduits à partir du guidon (38) directement dans l'avancée (32) et à partir de l'avancée (32) par la réception de palier supérieure (34) dans le tube de guidage (16), si bien que les éléments d'activation (14) soient disposés entièrement à l'intérieur du guidon (38), de l'avancée (32), du tube de guidage (16) et de l'élément de cadre (12).

2. Cadre de bicyclette avec fourche de bicyclette avec pont double selon la revendication 1, **caractérisé en ce que** le tronc de fourche (28) est attaché rigidement à l'avancée (32) et est notamment vissé.

3. Cadre de bicyclette avec fourche de bicyclette avec pont double selon l'une des revendications 1 ou 2, **caractérisé en ce qu'**un manchon (50) est relié à la réception de palier supérieure (34), qui comprend une ouverture (17) pour faire passer les éléments d'activation (14), orientée en direction de l'élément de cadre (12).

4. Cadre de bicyclette avec fourche de bicyclette avec pont double selon l'une des revendications 1 à 3, **caractérisé en ce que** le manchon (50) est relié à la réception de palier inférieure (22).

5. Cadre de bicyclette avec fourche de bicyclette avec pont double selon l'une des revendications 1 à 4, **caractérisé en ce qu'**une unité de freinage (44) intégrée dans la fourche de bicyclette est disposée en-dessous de la couronne de fourche (24).

6. Cadre de bicyclette avec fourche de bicyclette avec pont double selon la revendication 5, **caractérisé en ce que** l'unité de freinage (44) comprend deux leviers de freinage (58) qui sont disposés à l'intérieur des bras de fourche (26) et/ou de la couronne de fourche (24).

7. Cadre de bicyclette avec fourche de bicyclette avec pont double selon la revendication 6, **caractérisé en ce que** les leviers de freinage (58) sont portés par des axes de pivotement (60) disposés à l'intérieur des bras de fourche (26) et/ou de la couronne de fourche (24).

8. Cadre de bicyclette avec fourche de bicyclette avec pont double selon l'une des revendications 1 à 7, **caractérisé en ce que** la section transversale du bras de fourche (26) présente, au niveau d'un pneumatique monté, un rapport de longueur à largeur d'un maximum de 3:1.
